# EUROPEAN PATENT APPLICATION

(11) **EP 4 195 871 A1**
(43) Date of publication of application: **14.06.2023**
(21) Application number: 21213728.5
(22) Date of filing: 10.12.2021
(51) Int. Cl.: H04W 88/08, H04W 88/10

(54) **CONVERGED WIRELESS ACCESS SYSTEM AND METHOD**

(71) Applicant: INTEL Corporation, Santa Clara, CA 95054 (US)
(72) Inventor: DOOSTNEJAD, Roya, Los Altos, 94024 (US); PARKER, Valerie, Portland, 97229 (US); CORDEIRO, Carlos, Portland, 97229 (US); RESHEF, Ehud, 36551 Qiryat Tivon (IL); CAVATUR, Ranjit, Laguna Niguel, 92677 (US)
(74) Representative: Viering, Jentschura & Partner mbB Patent- und Rechtsanwälte

(57) **Abstract**

A wireless communication system includes a radio head and a radio head processor, comprising a first processing subsystem, configured to process a signal according to a first radio access technology; the new radio distributed unit, comprising a second communication port, configured to couple the new radio distributed unit to the radio head; a third communication port, configured to couple the new radio distributed unit to a new radio centralized unit or an edge network processor; and a new radio distributed unit processor, comprising a second processing subsystem, and configured to process a signal according to the first radio access technology; wherein either the radio head processor or the new radio distributed unit processor further comprises a third processing subsystem, configured to process a signal according to a second radio access technology, different from the first radio access technology.

## Description

### Technical Field

Various aspects of this disclosure generally relate to the processing of multiple radio access technologies in a single radio controller.

### Background

New radio technologies enable use of other radio access technologies (e.g. they enable multi-access) through interfaces, such as, for example, via the non-3GPP Interworking Function (N3IWF) or the Trusted Non-3GPP Gateway Function (TNGF) interfaces in the 5^{th} Generation Technology Standard (5G) of the 3^{rd} Generation Partnership Project (3GPP). In conventional practice, separate radio access technologies, such as, for example, the wireless protocols under the Institute of Electrical and Electronics Engineers (IEEE) family standards IEEE 802.11 (Wi-Fi) and New Radio protocols such as 5G or the forthcoming 6^{th} Generation Technology Standards (6G) are implemented with separate controllers and on separate radios. Network optimization, analytics, and spectrum management are also performed separately for each of the radio access technologies. The reliance on multiple radio results in increased cost. Furthermore, these separate implementations may create difficulties in maintaining quality of service (QoS), such as when the data traffic is transferred from 5G to WiFi.

### Brief Description of the Drawings

In the drawings, like reference characters generally refer to the same parts throughout the different views. The drawings are not necessarily to scale, emphasis instead generally being placed upon illustrating the exemplary principles of the disclosure. In the following description, various exemplary embodiments of the disclosure are described with reference to the following drawings, in which:
FIGs. 1A and 1B depict a converged enterprise wireless access platform that supports both licensed cellular New Radio and Wi-Fi/unlicensed technologies;
FIG. 2 depicts functional features of a converged RH according to an aspect of the disclosure;
FIG. 3 depicts an aspect of the disclosure in which a Wi-Fi controller and a cellular controller are integrated in a New Radio Centralized Unit;
FIG. 4 depicts a wireless communication system according to various examples; and
FIG. 5 depicts a method of wireless communication.

### Description

The following detailed description refers to the accompanying drawings that show, by way of illustration, exemplary details and embodiments in which aspects of the present disclosure may be practiced.

The word "exemplary" is used herein to mean "serving as an example, instance, or illustration". Any embodiment or design described herein as "exemplary" is not necessarily to be construed as preferred or advantageous over other embodiments or designs.

Throughout the drawings, it should be noted that like reference numbers are used to depict the same or similar elements, features, and structures, unless otherwise noted.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (e.g., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPointTM, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

Herein are described procedures and devices to expand a New Radio platform, such an a platform operating on an Open Radio Access Network (Open RAN) architecture, to enable a converged enterprise wireless access platform that supports both licensed cellular technologies (e.g. such as 5G and/or 6G), and Wireless Local Area Network (WLAN)/unlicensed technologies, such as Wi-Fi. These procedures and devices may utilize one or more Open RAN concepts, including, but not limited to, architecture and/or concepts of the Telecom Infra Project (TIP) and/or of the O-RAN Alliance's Open RAN initiative. According to some aspects of this disclosure, the implementations of these Open RAN and TIP architectures may further utilize artificial intelligence (AI) for analytics and spectrum management.

TIP is a collaborative telecommunications initiative that generates processes and standards for global telecommunications infrastructure. One of TIP's projects is the OpenRAN initiative, which seeks to define vender-agnostic with open interfaces. TIP also promulgates OpenWiFi, which is a disaggregated Wi-Fi solution. Open RAN is an initiative of the O-RAN Alliance and includes a plurality of standards that allow for a virtualized RAN implementation.

Each of New Radio and Wi-Fi is a protocol for wireless transfer of data via electromagnetic signals. The relevant portions of the electromagnetic spectrum may be licensed (e.g. reserved, usually by a state or legal jurisdiction, for use only by a licensed user or users) or unlicensed (e.g. generally available for use by any user). New Radio signals may be principally or exclusively transmitted within the licensed radiofrequency spectrum, whereas Wi-Fi signals may be principally or exclusively transmitted within the unlicensed spectrum. The specific frequencies that are licensed or unlicensed may differ depending on a particular jurisdiction. For example, the unlicensed spectrum may differ between the United States, Europe, and parts of Asia. The principles and devices disclosed herein, however, are readily applicable to all licensed / unlicensed schemas, regardless of the jurisdiction.

Open RAN generally conceptualizes a RAN in terms of four functional blocks, which may be understood as a Radio Unit (RU), a Distributed Unit (DU), a Centralized Unit (CU), and a RAN Intelligent Controller (RIC). Since the specific tasks of the RU, DU, and CU are largely configurable, various configurations of these units will be described herein according to various aspects of the disclosure. The RU may generally handle digital frontend capabilities (e.g. digital/analog or analog/digital conversion, signal amplification, etc.) and portions of the Physical Layer (PHY or PHY Layer) according to the Open Systems Interconnection model (OSI model), and may also include functionality related to digital beamforming. The PHY Layer portions assigned to the RU may be understood as the Lower PHY Layer. The DU may receive an output of the RU for Receive (Rx) signals and may output to the RU for Transmit (Tx) signals. The DU may perform upper-lever PHY Layer functions, which may be referred to as the Higher PHY Layer. The DU may also perform Radio Link Control (RLC) and Medium Access Control (MAC) layer functions. The CU may perform primarily Radio Resource Control (RRC) and Packet Data Convergence Protocol (PDCP) functions.

The principles and devices disclosed herein include an architecture in which New Radio (licensed) and Wi-Fi (unlicensed) are combined into a single radio network with one controller that virtualizes both the licensed and unlicensed bands. Moreover, other aspects of the disclosure may describe optional enablement of intelligent spectrum management and network analytics across both licensed and unlicensed frequency bands.

As a general matter, such single-controller processing of multiple RATs may be achieved in part using partially software-implemented signal processing, such as, but not necessarily limited to, software-based baseband signal processing. That is, rather than relying on proprietary or RAT-specific hardware for baseband processing, one or more processors (e.g. one or more general purpose processors, one or more accelerators, one or more special-purpose processors, etc.) can be used to perform may lower layer functions in software. That is, a radiofrequency signal received at one or more antennas may travel to an analog/digital converter. A processor may then perform lower layer functions (e.g. one or more physical layer functions) on this digital signal. Depending on the Open RAN architecture, a processor in the RU may be configured to perform certain low Physical Layer functions, and a processor in the DU may be configured to perform certain high Physical Layer function, as well as optional performance of Radio Link Control and/or Medium Access Control. Open RAN permits various degrees of flexibility in the specific functions that are attributed to the RU, the DU, or the CU.

The processor in the RU and/or the DU may be configured to perform signal processing operations on signals of multiple RATs (for example, of New Radio (5G or 6G) and Wi-Fi). The processor of the RU and/or the DU may achieve this, for example, by using software containerization or software virtualization. Software containerization is a concept in which a standard unit of software that includes the relevant code and all of its dependencies is generated, for example, so that this standard unit of code can be quickly run among a plurality of computer environments. Software containers are generally understood to be standalone packages of executable code. One advantage of using containerization may be that containers are isolated from their environment and therefore may allow for uniformity in operation despite variations in the platform on which they operate. The RU and/or the DU processor may be configured to implement a software containerization using any known containerization method or protocol.

For example, the RU processor may implement a first software container, configured to process signals of a first RAT, and a second software container, configured to process signals of a second RAT.

To manage these containers, the device may include a container orchestrator, which may be configured to orchestrate the actions of any of the first plurality of software containers or the second plurality of software containers, and/or any of their subcontainers. Container orchestration is known, and therefore a recitation of container orchestration will not be included herein.

Alternatively, rather than relying on containerization, the RU and/or DU processors may employ machine virtualization. Machine virtualization is a technique in which one or more virtual machines are implemented on a processing core. The use of virtual machines may include an additional security benefit as compared to the use of containers, given that virtual machines are isolated from one another and utilize their own distinct and isolated resources. That is, a first virtual machine may be unable to read or modify data resources of a second virtual machine, and vice versa.

Throughout this description, the term "processing subsystem" (e.g. a "first processing subsystem," a "second processing subsystem,", etc.) are used. In an implementation using containers, such as a first container for a first RAT and a second container for a second RAT, the processing subsystem may be understood as referring to the container. In this manner, the first processing subsystem refers to a first container for processing a first RAT, a second processing subsystem refers to a second container for processing a second RAT, and so on. Should virtualization be employed instead, the first processing subsystem may be understood as referring to the first virtualization for processing a first RAT, a second processing subsystem may be understood as referring to the second virtualization for processing a first RAT, and so on.

According to an aspect of the disclosure, a configurable architecture for both licensed and unlicensed spectrum may be configured according to four pillars. In the first pillar, Wi-Fi functionally (e.g. such as Wi-Fi functionality that may conventionally be implemented in a radio head (RH)) and cellular New Radio functionally that may conventionally be implemented in a radio unit (RU), may be integrated into a single RH. This may be achieved in architecture in which a Wi-Fi access point (AP) is integrated within a radio head or the Wi-Fi AP with the DU. The RU may utilize the same antennas or different sets of antennas for the licensed and unlicensed bands. The RU processes signals (Tx or Rx) for each band. These processed signals are multiplexed for communication between the RU and the DU or CU. Signal transfer between the RU and the DU or CU may occur, for example, via an Ethernet cable.

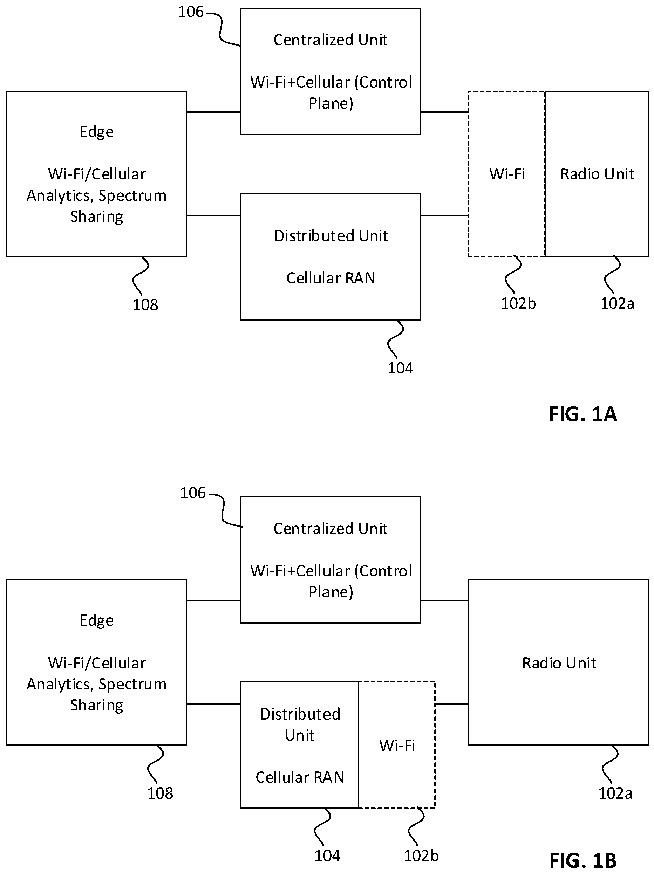

FIG 1A and FIG 1B depict a converged enterprise wireless access platform that supports both licensed cellular New Radio and Wi-Fi/unlicensed technologies, according to two aspects of the disclosure. In each of these figures, the RU 102a is coupled to the DU 104 and the CU 106. Each of the DU 106 and the CU 106 are coupled to an Edge Computing Platform 108. FIG. 1A differs from FIG. 1B in that FIG. 1A depicts certain Wi-Fi capabilities 102b as being implemented in the RU 102a, whereas in FIG. 1B, these Wi-Fi capabilities 102b are generally performed within the DU (the Wi-Fi module 102b that was depicted as part of the RU in FIG. 1A is depicted as part of the DU in FIG. 1B). In each of these paradigms, the DU 104 may be configured to perform cellular RAN functions (and also to perform Wi-Fi functions when implemented according to FIG. 1B). The CU 106 may be configured to perform control plane functions of both Wi-Fi and cellular / New Radio communication. The Edge Computing Platform 108 may be configured to perform Wi-Fi and/or cellular analytics, and/or to manage spectrum sharing.

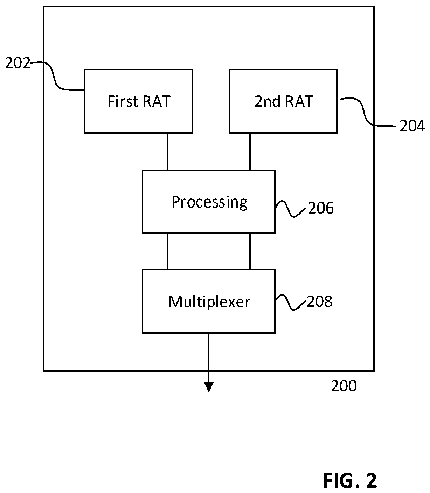

FIG. 2 depicts functional features of a converged RH according to an aspect of the disclosure. In this figure, the RH includes capabilities for a first radio access technology 202 (e.g. a cellular technology, a new radio technology, etc.) and a second radio access technology 204 (e.g. Wi-Fi). Each of blocks 202 and 204 represent the respective functionality of the RH with respect to the first radio access technology 202 and the second radio access technology 204. Each functional unit 202 and 204 may include one or more antennas for transmission and/or reception of signals according to the respective radio access technology and an analog/digital (and/or digital/analog) converter. Alternatively, each of the first radio access technology 202 functional unit and the second radio access technology 204 functional unit may have its own digital/analog or analog/digital converter but share one or more common antennas. A processing unit 206 (e.g. a radio head processor) may be configured to receive digital signals from the cellular functional unit 202 and the Wi-Fi functional unit 204 and/or to send signals to the cellular functional unit 202 and the Wi-Fi functional unit 204. The processing unit 206 may be configured to process the Wi-Fi and cellular signals according to their respective RAT protocols. The RU may further include a multiplexer 208, configured to combine the processed cellular data and the processed Wi-Fi data and to output these data in a single datastream to the DU and/or CU.

The Open RAN architecture permits various functional split configurations, in which functions can be selectively assigned to the RU or the DU, and to some extent, the CU. For example, in an Open RAN 7-2 Split architecture, the RU is assigned radiofrequency functions e.g. amplification, A/D conversion, etc.) and low Physical Layer functions, whereas the DU performs high Physical Layer functions, as well as MAC and RLC. In an Open RAN 8-1 Split, the RH performs only the radiofrequency functions, and the DU performs all Physical Layer functions, as well as MAC and RLC.

According to a first aspect of the disclosure, this first pillar configuration may include the RU performing the cellular functions according to an ORAN split-7 architecture, wherein the RU performs some (e.g. lower) physical layer processing, and the RU performs all or substantially all functions of an Wi-Fi access point (e.g. an ORAN Split-2 architecture).

According to a second aspect of the disclosure, this first pillar configuration may include the RU performing the cellular functions according to the ORAN split-7 architecture, wherein the RU performs some (e.g. lower) physical layer processing, and the DU performs all or substantially all functions of the Wi-Fi access point (e.g. a Split-2 architecture).

According to a third aspect of the disclosure, this first pillar configuration may include the RU performing PHY layer and MAC layer cellular processing, and all or substantially all functions of the Wi-Fi access point (e.g. an Split-2 architecture).

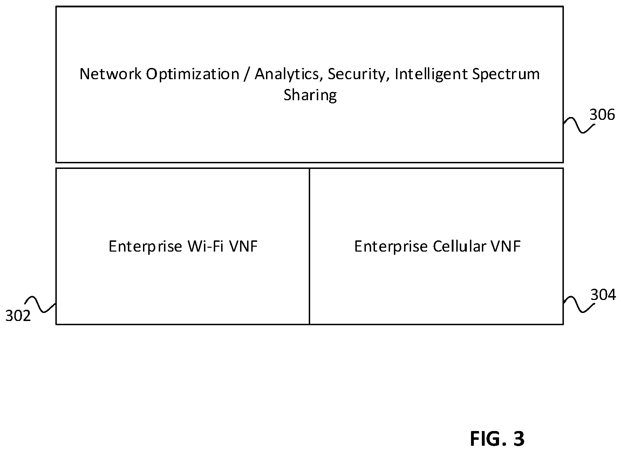

FIG. 3 depicts the second pillar, in which the Wi-Fi controller and the cellular controller are integrated in the CU. The CU architecture may include multiple containers for carrying out various processing tasks. For example, the CU may include a first container 302 for performing a Virtualized Network Function (VNF) for Wi-Fi (e.g. a router function, a firewall function, a WAN optimization function, a network address translation (NAT) services, etc.), and the CU may include a second container 304 for performing a VNF for Cellular communication. The CU may include a third container 306 for performance of additional functions, including network optimization / analytics (e.g. WAN performance, Memory and CPU, errors, duplicate packets or packet loss, latency, traffic management) security, intelligent spectrum sharing, or any of these.

In the third pillar, the CU may be configured to perform integrated network optimization and spectrum management across multiple bands. In this optional configuration, the single controller for both Wi-Fi and cellular processing may perform artificial intelligence (AI)-based analytics and/or intelligent spectrum management across different bands to be implemented in the CU. The AI may include, for example, one or more artificial neural networks (ANN). The ANN may include, for example, a input layer, one or more hidden layers, and an output layer, wherein each of the input layer, the one or more hidden layers, and the output layer include one or more nodes, which may be characterized with weights and or biases. The ANN may be trained to leverage the spectrum type based on policies, the use case scenario, the user configuration, or any of these.

The CU may perform these analytics by leveraging telemetric data from both licensed and unlicensed bands. For AI-implementation, training policies (machine learning or classic models) may include, but are not limited to, maintaining QoS when data is moved from Cellular to WiFi; maintaining security; maintaining reliability; maintaining mobility QoS / ease of handover; maintaining precise positioning; or any of these.

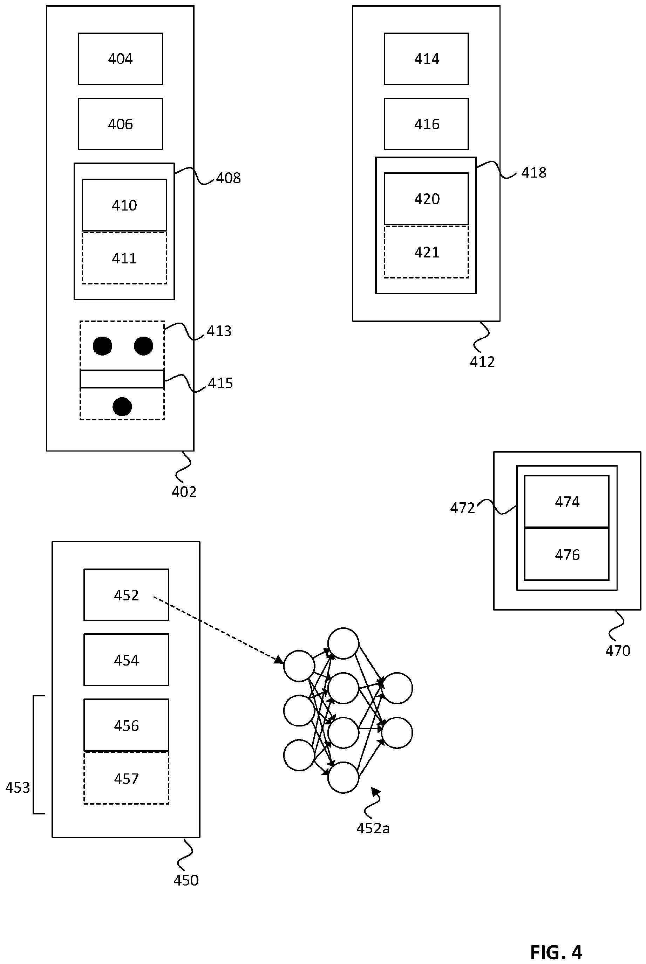

FIG. 4 depicts a wireless communication system according to various examples. In a first example, the wireless communication system includes a radio head 402. The radio head 402 includes an antenna port 404; a first communication port 406, configured to couple the radio head to a new radio distributed unit; and a radio head processor 408. The radio head processor 408 includes a first processing subsystem 410, configured to process a signal according to a first radio access technology.

Further as to the first example, the wireless communication system further includes the new radio distributed unit 412. The new radio distributed unit 412 includes a second communication port 414, configured to couple the new radio distributed unit 412 to the radio head 402. The new radio distributed unit 412 further includes a third communication port 416, configured to couple the new radio distributed unit 412 to a new radio centralized unit 450 or an edge network processor 470. The new radio distributed unit 412 further includes a new radio distributed unit processor 418 that includes a second processing subsystem 420, which is configured to process a signal according to the first radio access technology. Either the radio head processor 408 or the new radio distributed unit processor 418 may further include a third processing subsystem (depicted alternatively as 411 and 421 as connoted by the dashed outline), which is configured to process a signal according to a second radio access technology, different from the first radio access technology.

In a second example, the wireless communication system of the first example may be optionally further configured, wherein the radio head processor 408 includes the third processing subsystem 411; wherein the third processing subsystem 411 is further configured to receive a signal according to the second radio access technology from either the antenna port 404 or the first communication port 406; to process the signal according to the second radio access technology, and to send the processed signal to another of the antenna port 404 or the first communication port 406.

In a third example, the wireless communication system of the second example may be optionally further configured, wherein the radio head further includes a multiplexer 413, the multiplexer 413 including a first port (top left circle within 413), configured to convey a signal to the first processing subsystem 410 or receive a signal from the first processing subsystem 410; a second port (top right circle within 413), configured to convey a signal to the second processing subsystem 420 or receive a signal from the second processing subsystem 420; a third port (bottom circle within 413), configured to convey a signal to the third processing subsystem 411 or receive a signal from the third processing subsystem 411; and a switching network 415, configured to selectively connect the second processing subsystem 420 to either the first processing subsystem 410 or the third processing subsystem 411.

In a fourth example, the wireless communication system of example 1 may be optionally configured, wherein the new radio distributed unit processor 418 includes the third processing subsystem 421; wherein the third processing subsystem 421 is further configured to receive a signal according to the second radio access technology from either the second communication port 414 or the third communication port 416; process the signal according to the second radio access technology, and send the processed signal to another of the second communication port 414 or the third communication port 416.

In a fifth example, the wireless communication system of example four may be optionally configured, wherein the radio head further includes a multiplexer 415, the multiplexer including a first port, configured to convey a signal to the first processing subsystem 410 or receive a signal from the first processing subsystem 410; a second port, configured to convey a signal to the second processing subsystem 420 or receive a signal from the second processing subsystem 420; a third port, configured to convey a signal to the third processing subsystem 421 or receive a signal from the third processing subsystem 421; and a switching network 415, configured to selectively connect the first processing subsystem 410 to either the second processing subsystem 420 or the third processing subsystem 421.

In a sixth example, the wireless communication system of any of the first example through the fifth example may be optionally configured, wherein each of the first processing subsystem 410 and the third processing subsystem 411/421 is an OS-level virtualization container.

In a seventh example, the wireless communication system of any of the first example through the fifth example may be optionally configured, wherein each of the first processing subsystem 410 and the third processing subsystem 411/421 is a virtualized machine.

In an eighth example, the wireless communication system of any one of the first example to the seventh example may be configured, wherein the first radio access technology is a licensed wireless network technology.

In a ninth example, the wireless communication system of the eighth example may be optionally configured, wherein the licensed wireless network technology is any of a 4th Generation Broadband Cellular Network Technology (4G), a 5th Generation Broadband Cellular Network Technology (5G) according to the 3^{rd} Generation Partnership Project (3gPP), a 6^{th} Generation Broadband Cellular Network Technology (6G), or a 6^{th} generation technology standard (6G) according to the Next G Alliance of the Alliance for Telecommunications Industry Solutions.

In a tenth example, the wireless communication system of any of the first example through the ninth example may be optionally configured, wherein the second radio access technology is an unlicensed wireless network technology.

In an eleventh example, the wireless communication system of the tenth example may be optionally configured, wherein the unlicensed wireless network technology is an unlicensed wireless network technology according to the Wi-Fi Alliance (Wi-Fi) and/or the Institute of Electrical and Electronics Engineers (IEEE) Standard 802.11 (Wi-Fi).

In a twelfth example, the wireless communication system of any of the first through the eleventh example may be optionally configured, wherein the first processing subsystem is configured to receive a signal representing a first radiofrequency transmission from a first radiofrequency band, and wherein the second processing subsystem is configured to receive a signal representing a second radiofrequency transmission from a second radiofrequency band, different from the first radiofrequency band.

In a thirteenth example, the wireless communication system of the twelfth example may be optionally configured, wherein the first radiofrequency band is a licensed band, and wherein the second radiofrequency band is an unlicensed band.

In a fourteenth example, the wireless communication system of any of the first example through the thirteenth example may be further configured, wherein the first processing subsystem is configured to perform one or more actions of a physical layer, and wherein the second processing subsystem is configured to perform one or more actions of a radio link control.

In a fifteenth example, the wireless communication system of any of the first through the fourteenth examples may be optionally configured, wherein the radio head and the new radio distributed unit are configured to implement an Open RAN Split 7-2 architecture for each of the first radio access technology and the second radio access technology.

In a sixteenth example, the wireless communication system of the fifteenth example may be optionally configured, wherein implementing the Open RAN Split 7-2 architecture includes the radio head being configured to perform one or more low physical layer processes for each of the first radio access technology and the second radio access technology, and wherein the new radio distributed unit is configured to perform one or more high physical layer processors for each of the first radio access technology and the second radio access technology.

In a seventeenth example, the wireless communication system of the sixteenth example may be optionally configured, wherein the one or more low physical layer processes include any of analog beamforming, digital beamforming, digital to analog conversion, analog to digital conversion, Fast Fourier Transform, Inverse Fast Fourier Transform, or precoding.

In an eighteenth example, the wireless communication system of the sixteenth example or the seventheenth example may be optionally configured, wherein the one or more high physical layer processes include any of resource element mapping, layer mapping, scrambling, precoding, modulation, and encoding, rate matching, or cyclic redundancy code generation.

In a nineteenth example, the wireless communication system of any of the first through the fourteenth examples may be optionally configured, wherein the radio head and the new radio distributed unit are configured to implement an Open RAN Split 8-1 architecture for each of the first radio access technology and the second radio access technology.

In a twentieth example, the wireless communication system of the nineteenth example may be optionally configured, wherein implementing the Open RAN Split 7-1 architecture includes the radio head being configured to perform one or more radiofrequency-level processes for each of the first radio access technology and the second radio access technology, and wherein the new radio distributed unit is configured to perform one or more physical layer processors for each of the first radio access technology and the second radio access technology.

In a twenty-first example, the wireless communication system of the twentieth example may be optionally configured, wherein the one or more radiofrequency level processes include any of digital to analog conversion or analog to digital conversion.

In a twenty-second example, the wireless communication system of the twentieth or the twenty-first example may be optionally configured, wherein the one or more high physical layer processes include any of resource element mapping, layer mapping, scrambling, precoding, modulation, and encoding, rate matching, or cyclic redundancy code generation, beamforming, cyclic prefix insertion, Fast Fourier Transform, or Inverse Fast Fourier Transform.

In a twenty-third example, the wireless communication system of any one of the first through the twenty-second examples example may be optionally configured, wherein the first processing subsystem is configured to receive a first signal according to the first radio access technology from either the antenna port or the first communication port; generate a second signal as the processed first signal; and send the second signal to another of the antenna port or the communication port.

In a twenty-fourth example, the wireless communication system of any of the first through the twenty-third examples may be optionally configured, wherein the second processing subsystem is configured to receive a third signal according to the first radio access technology from either the second communication port or the third communication port; generate a fourth signal as the processed third signal; and send the fourth signal to another of the second communication port or the third communication port.

In a twenty-fifth example, the wireless communication system of any of the first through the twenty-fourth examples may be optionally configured, wherein the third processing subsystem is configured to receive a fifth signal according to the second radio access technology and generate a sixth signal as the processed fifth signal.

In a twenty-sixth example, the wireless communication system of any of the first through the twenty-fifth examples may be optionally configured to further include a new radio centralized unit 450, communicatively coupled to the radio head 402, and further coupled to or including an artificial neural network 452a (depicted as coupled to an artificial neural network with a dashed line to indicate that the artificial neural network may be a part of the new radio centralized unit, or that the artificial neural network may be external to the new radio centralized unit), wherein the artificial neural network 452a is configured to receive first data from the first processing subsystem or the second processing subsystem and second data from the third processing subsystem, and to preform one or more spectrum management calculations based on the first data and the second data.

In a twenty-seventh example, the wireless communication system of the twenty-sixth example may further include, wherein the one or more spectrum management calculations include quality of service calculations for transition from data transfer according to the first radio access technology to data transfer according to the second radio access technology.

In a twenty-eighth example, the wireless communication system of the twenty-sixth example may be optionally configured, wherein the one or more spectrum management calculations include quality of service calculations for transition from data transfer according to the second radio access technology to data transfer according to the first radio access technology.

In a twenty-ninth example, the wireless communication system of the twenty-seventh and the twenty-eighth examples may be optionally configured, wherein the one or more spectrum management calculations include one or more security calculations, reliability calculations, mobility QoS/Handover calculations, positioning calculations, or any of these.

In a thirtieth example, the wireless communication system of any of the twenty-seventh to the twenty-ninth examples may be optionally configured, wherein the artificial neural network is configured to send a result of the one or more spectrum management calculations to the processor unit, and wherein the processor is configured to change a setting for wireless reception or wireless transmission on the first radio access technology or the second radio access technology based on the received result of the one or more spectrum management calculations.

In a thirty-first example, the wireless communication system of any of the twenty-seventh through the twenty-ninth examples may be optionally configured, wherein the artificial neural network is configured to determine a modification for wireless reception or wireless transmission on the first radio access technology or the second radio access technology based on the one or more spectrum management calculations, and to send to the processor an instruction to implement the modification.

In a thirty-second example, the wireless communication system of any of the twenty-seventh through the twenty-ninth examples may be further configured, wherein the artificial neural network is configured to determine a modification for wireless reception or wireless transmission on the first radio access technology or the second radio access technology based on the one or more spectrum management calculations, and to implement the modification.

In a thirty-third example, the wireless communication system of any of the twenty-seventh through the thirty-second example may be optionally configured, wherein the spectrum management calculation includes a handoff procedure between the first radio access technology and the second radio access technology.

In a thirty-fourth example, the wireless communication system of any of the twenty-seventh through the thirty-third example may be optionally configured, wherein the spectrum management calculation includes quality performance indicator of the first radio access technology and for use in the second radio access technology.

In a thirty-fifth example, the wireless communication system of any one of the first through the thirty-fourth examples may be optionally configured to further include a new radio centralized unit 450; the new radio centralized unit being communicatively coupled to the radio head 402 and the distributed unit 412, and including a centralized unit processor 453; the centralized unit processor including a fourth processing subsystem 456, configured to process data according to the first radio access technology, and a fifth processing subsystem 457, configured to process data according the second radio access technology.

In a thirty-sixth example, the wireless communication system of the thirty-fifth example may be optionally configured, wherein the centralized unit processor is configured to perform one or more analytics operations based on data from the fourth processing subsystem and data from the fifth processing subsystem.

In a thirty-seventh example, the wireless communication system of claim 35 or 36 may be optionally configured, wherein the centralized unit processor is further configured as an analytics processor 454 to perform one or more optimization operations based on data from the fourth processing subsystem and data from the fifth processing subsystem, wherein the analytics processor is configured to perform the one or more optimization operations using the artificial neural network 452.

In combination with any of the above examples, the wireless communication system may optionally further include a New Radio Centralized Unit (CU) 470, including a processor 474; wherein the processor includes a first processing subsystem 474, configured to process data corresponding to a first RAT, and a second processing subsystem 476, configured to process signals according to a second RAT. The first processing subsystem 474 may be configured to perform one or more enterprise VNFs for the first RAT, and the second processing subsystem 476 may be configured to perform one or more enterprise VNFs for the second RAT.

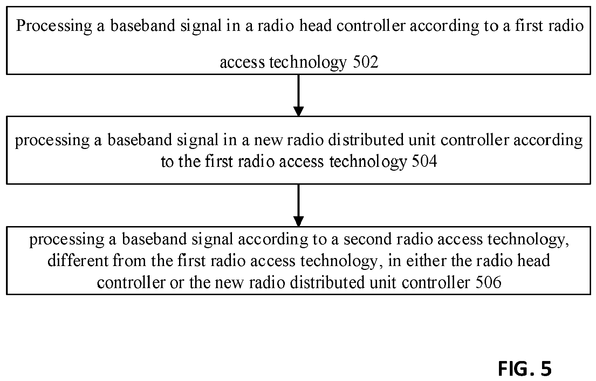

FIG. 5 depicts a method of wireless communication, including processing a baseband signal in a radio head controller according to a first radio access technology 502; processing a baseband signal in a new radio distributed unit controller according to the first radio access technology 504; and processing a baseband signal according to a second radio access technology, different from the first radio access technology, in either the radio head controller or the new radio distributed unit controller 506. The method may optionally further include processing the baseband signal according to the second radio access technology, different from the first radio access technology, in the radio head; wherein processing the signal according to the second radio access technology includes receiving the baseband signal according to the second radio access technology; processing the baseband signal according to the second radio access technology, and sending the processed baseband signal to the new radio distributed unit. Alternatively, the method may optionally further include processing the baseband signal according to the second radio access technology, different from the first radio access technology, in the new radio distributed unit; wherein processing the baseband signal includes receiving the baseband signal according to the second radio access technology; processing the baseband signal according to the second radio access technology; and sending the processed baseband signal to the radio head or to a new radio centralized unit. Any of the above examples of the method may optionally additionally include wherein the first radio access technology is a licensed wireless network technology and/or wherein the licensed wireless network technology is any of a 4th Generation Broadband Cellular Network Technology (4G), a 5th Generation Broadband Cellular Network Technology (5G) according to the 3^{rd} Generation Partnership Project (3gPP), a 6^{th} Generation Broadband Cellular Network Technology (6G), or a 6^{th} generation technology standard (6G) according to the Next G Alliance of the Alliance for Telecommunications Industry Solutions. Any of the above examples of the method may optionally additionally include wherein the second radio access technology is an unlicensed wireless network technology and/or wherein the unlicensed wireless network technology is an unlicensed wireless network technology according to the Wi-Fi Alliance (Wi-Fi) and/or the Institute of Electrical and Electronics Engineers (IEEE) Standard 802.11 (Wi-Fi).

In the fourth pillar, integrated baseband modules may permit converged RAN in the distributed unit. A given device or system as described herein may include pillar one, pillar two, pillar three, pillar four, or any of these.

Rather than processing New Radio and Wi-Fi (or licensed spectrum tasks and unlicensed spectrum communications) in separate controller, the principles and devices described herein may result in lower complexity systems at a lower cost of ownership. This may further allow for intelligent spectrum sharing across licensed and unlicensed bands. This may also result in improved network optimization and additional flexibility to deliver differentiated services. It may permit consistent Quality of Service (QoS) across cellular and WiFi communications, with seamless connectivity for the end user.

Additional aspects of the disclosure will be disclosed below by way of example.

In Example 1, a wireless communication system, including a radio head, including an antenna port; a first communication port, configured to couple the radio head to a new radio distributed unit; and a radio head processor, including a first processing subsystem, configured to process a signal according to a first radio access technology; the new radio distributed unit, including a second communication port, configured to couple the new radio distributed unit to the radio head; a third communication port, configured to couple the new radio distributed unit to a new radio centralized unit or an edge network processor; and a new radio distributed unit processor, including a second processing subsystem, and configured to process a signal according to the first radio access technology; wherein either the radio head processor or the new radio distributed unit processor further includes a third processing subsystem, configured to process a signal according to a second radio access technology, different from the first radio access technology.

In Example 2, the wireless communication system of Example 1, wherein the radio head processor includes the third processing subsystem; wherein the third processing subsystem is further configured to receive a signal according to the second radio access technology from either the antenna port or the first communication port; to process the signal according to the second radio access technology, and send the processed signal to another of the antenna port or the first communication port.

In Example 3, the wireless communication system of Example 2, wherein the radio head further includes a multiplexer, the multiplexer including a first port, configured to convey a signal to the first processing subsystem or receive a signal from the first processing subsystem; a second port, configured to convey a signal to the second processing subsystem or receive a signal from the second processing subsystem; a third port, configured to convey a signal to the third processing subsystem or receive a signal from the third processing subsystem; and a switching network, configured to selectively connect the third processing subsystem to either the first processing subsystem or the third processing subsystem.

In Example 4, the wireless communication system of Example 1, wherein the new radio distributed unit processor includes the third processing subsystem; wherein the third processing subsystem is further configured to receive a signal according to the second radio access technology from either the second communication port or the third communication port; process the signal according to the second radio access technology, and send the processed signal to another of the antenna port or the communication port.

In Example 5, the wireless communication system of Example 4, wherein the radio head further includes a multiplexer, the multiplexer including a first port, configured to convey a signal to the first processing subsystem or receive a signal from the first processing subsystem; a second port, configured to convey a signal to the second processing subsystem or receive a signal from the second processing subsystem; a third port, configured to convey a signal to the third processing subsystem or receive a signal from the third processing subsystem; and a switching network, configured to selectively connect the second processing subsystem to either the first processing subsystem or the third processing subsystem.

In Example 6, the wireless communication system of Example 1 or 5, wherein each of the first processing subsystem and the third processing subsystem is an OS-level virtualization container.

In Example 7, the wireless communication system of Example 1 or 5, wherein each of the first processing subsystem and the third processing subsystem is a virtualized machine.

In Example 8, the wireless communication system of any one of Examples 1 to 7, wherein the first radio access technology is a licensed wireless network technology.

In Example 9, the wireless communication system of Example 8, wherein the licensed wireless network technology is any of a 4th Generation Broadband Cellular Network Technology (4G), a 5th Generation Broadband Cellular Network Technology (5G) according to the 3^{rd} Generation Partnership Project (3gPP), a 6^{th} Generation Broadband Cellular Network Technology (6G), or a 6^{th} generation technology standard (6G) according to the Next G Alliance of the Alliance for Telecommunications Industry Solutions.

In Example 10, the wireless communication system of any one of Examples 1 to 9, wherein the second radio access technology is an unlicensed wireless network technology.

In Example 11, the wireless communication system of Example 10, wherein the unlicensed wireless network technology is an unlicensed wireless network technology according to the Wi-Fi Alliance (Wi-Fi) and/or the Institute of Electrical and Electronics Engineers (IEEE) Standard 802.11 (Wi-Fi).

In Example 12, the wireless communication system of any one of Examples 1 to 11, wherein the first processing subsystem is configured to receive a signal representing a first radiofrequency transmission from a first radiofrequency band, and wherein the second processing subsystem is configured to receive a signal representing a second radiofrequency transmission from a second radiofrequency band, different from the first radiofrequency band.

In Example 13, the wireless communication system of Example 12, wherein the first radiofrequency band is a licensed band, and wherein the second radiofrequency band is an unlicensed band.

In Example 14, the wireless communication system of any one of Examples 1 to 13, wherein the first processing subsystem is configured to perform one or more actions of a physical layer, and wherein the second processing subsystem is configured to perform one or more actions of a radio link control.

In Example 15, the wireless communication system of any one of Examples 1 to 14, wherein the radio head and the new radio distributed unit are configured to implement an Open RAN Split 7-2 architecture for each of the first radio access technology and the second radio access technology.

In Example 16, the wireless communication system of Example 15, wherein implementing the Open RAN Split 7-2 architecture includes the radio head being configured to perform one or more low physical layer processes for each of the first radio access technology and the second radio access technology, and wherein the new radio distributed unit is configured to perform one or more high physical layer processors for each of the first radio access technology and the second radio access technology.

In Example 17, the wireless communication system of Example 16, wherein the one or more low physical layer processes include any of analog beamforming, digital beamforming, digital to analog conversion, analog to digital conversion, Fast Fourier Transform, Inverse Fast Fourier Transform, or precoding.

In Example 18, the wireless communication system of Example 16 or 17, wherein the one or more high physical layer processes include any of resource element mapping, layer mapping, scrambling, precoding, modulation, and encoding, rate matching, or cyclic redundancy code generation.

In Example 19, the wireless communication system of any one of Examples 1 to 14, wherein the radio head and the new radio distributed unit are configured to implement an Open RAN Split 8-1 architecture for each of the first radio access technology and the second radio access technology.

In Example 20, the wireless communication system of Example 19, wherein implementing the Open RAN Split 7-1 architecture includes the radio head being configured to perform one or more radiofrequency-level processes for each of the first radio access technology and the second radio access technology, and wherein the new radio distributed unit is configured to perform one or more physical layer processors for each of the first radio access technology and the second radio access technology.

In Example 21, the wireless communication system of Example 20, wherein the one or more radiofrequency level processes include any of digital to analog conversion or analog to digital conversion.

In Example 22, the wireless communication system of Example 20 or 21, wherein the one or more high physical layer processes include any of resource element mapping, layer mapping, scrambling, precoding, modulation, and encoding, rate matching, or cyclic redundancy code generation, beamforming, cyclic prefix insertion, Fast Fourier Transform, or

In Example 23, the wireless communication system of any one of Examples 1 to 22, wherein the first processing subsystem is configured to receive a first signal according to the first radio access technology from either the antenna port or the first communication port;

generate a second signal as the processed first signal; and send the second signal to another of the antenna port or the communication port.

In Example 24, the wireless communication system of Example 1 or 23, wherein the second processing subsystem is configured to receive a third signal according to the first radio access technology from either the second communication port or the third communication port; generate a fourth signal as the processed third signal; and send the fourth signal to another of the second communication port or the third communication port.

In Example 25, the wireless communication system of any one of Examples 1 to 24, wherein the third processing subsystem is configured to receive a fifth signal according to the second radio access technology and generate a sixth signal as the processed fifth signal.

In Example 26, the wireless communication system of any of Examples 1 to 25, further including a new radio centralized unit, communicatively coupled to the radio head, and further coupled to or including an artificial neural network, wherein the artificial neural network is configured to receive first data represented by the first signal and second data represented by the second signal, and to preform one or more spectrum management calculations based on the first data and the second data.

In Example 27, the wireless communication system of Example 26, wherein the one or more spectrum management calculations include quality of service calculations for transition from data transfer according to the first radio access technology to data transfer according to the second radio access technology.

In Example 28, the wireless communication system of Example 26, wherein the one or more spectrum management calculations include quality of service calculations for transition from data transfer according to the second radio access technology to data transfer according to the first radio access technology.

In Example 29, the wireless communication system of Example 27 or 28, wherein the one or more spectrum management calculations include one or more security calculations, reliability calculations, mobility QoS/Handover calculations, positioning calculations, or any of these.

In Example 30, the wireless communication system of any of Examples 27 to 29, wherein the artificial neural network is configured to send a result of the one or more spectrum management calculations to the processor unit, and wherein the processor is configured to change a setting for wireless reception or wireless transmission on the first radio access technology or the second radio access technology based on the received result of the one or more spectrum management calculations.

In Example 31, the wireless communication system of any of Examples 27 to 29, wherein the artificial neural network is configured to determine a modification for wireless reception or wireless transmission on the first radio access technology or the second radio access technology based on the one or more spectrum management calculations, and to send to the processor an instruction to implement the modification.

In Example 32, the wireless communication system of any of Examples 27 to 29, wherein the artificial neural network is configured to determine a modification for wireless reception or wireless transmission on the first radio access technology or the second radio access technology based on the one or more spectrum management calculations, and to implement the modification.

In Example 33, the wireless communication system of any of Examples 27 to 32, wherein the spectrum management calculation includes a handoff procedure between the first radio access technology and the second radio access technology.

In Example 34, the wireless communication system of any of Examples 27 to 33, wherein the spectrum management calculation includes quality performance indicator of the first radio access technology and for use in the second radio access technology.

In Example 35, the wireless communication system of any one of Examples 1 to 34, further including a new radio centralized unit; the new radio centralized unit being communicatively coupled to the radio head and the distributed unit, and including a centralized unit processor; the centralized unit processor including a fourth processing subsystem, configured to process data according to the first radio access technology, and a fifth processing subsystem, configured to process data according the second radio access technology.

In Example 36, the wireless communication system of Example 35, wherein the centralized unit processor is configured to perform one or more analytics operations based on data from the fourth processing subsystem and data from the fifth processing subsystem.

In Example 37, the wireless communication system of Example 35 or 36, wherein the centralized unit processor is configured to perform one or more optimization operations based on data from the fourth processing subsystem and data from the fifth processing subsystem.

In Example 38, the radio head, including an antenna port; and a processor, configured to receive a first signal representing a first radiofrequency transmission; and receive a second signal representing a second radiofrequency transmission; and wherein the processor includes: a first processing subsystem, configured for a first radio access technology, and configured to process the first signal according to the first radio access technology and generate a third signal as the processed first signal; and a second processing subsystem, configured for a second radio access technology, different from the first radio access technology, and configured to: process the second signal according to the second radio access technology and generate a fourth signal as the processed second signal.

In Example 39, the radio head of Example 1, further including a multiplexer; wherein the multiplexer includes: a first input, configured to receive the third signal; a second input, configured to receive the fourth signal; and a switching network, configured to output an output signal including the third signal and the fourth signal, to a distributed unit.

In Example 40, the radio head of Example 38 or 39, wherein each of the first processing subsystem and the second processing subsystem is a first OS-level virtualization container.

In Example 41, the radio head of Example 38 or 39, wherein each of the first processing subsystem and the second processing subsystem is a virtualized machine.

In Example 42, the radio head of any one of Examples 38 to 41, wherein the first radio access technology is an unlicensed wireless network technology.

In Example 43, the radio head of Example 42, wherein the unlicensed wireless network technology according to the Wi-Fi Alliance (Wi-Fi).

In Example 44, the radio head of any one of Examples 38 to 43, wherein the second radio access technology is a licensed wireless network technology.

In Example 45, the radio head of Example 44, wherein the licensed wireless network technology is any of a 4th Generation Broadband Cellular Network Technology (4G), a 5th Generation Broadband Cellular Network Technology (5G) according to the 3^{rd} Generation Partnership Project (3gPP), or a 6^{th} Generation Broadband Cellular Network Technology (6G).

In Example 46, the radio head of any one of Examples 38 to 45, wherein the first radio access technology is a wireless network technology according to Institute of Electrical and Electronics Engineers (IEEE) Standard 802.11 (Wi-Fi).

In Example 47, the radio head of any one of Examples 38 to 46, wherein the second radio access technology is the fifth generation technology (5G) according to the 3rd Generation Partnership Project (3GPP).

In Example 48, the radio head of any one of Examples 38 to 45, wherein the second radio access technology is the sixth generation technology standard (6G) according to the Next G Alliance of the Alliance for Telecommunications Industry Solutions.

In Example 49, the radio head of any one of Examples 38 to 48, wherein the first radiofrequency transmission is received on a first radiofrequency band, and wherein the second radiofrequency transmission is received on a second radiofrequency band, different from the first radiofrequency band.

In Example 50, the radio head of Example 49, wherein the first radiofrequency band is a licensed band, and wherein the second radiofrequency band is an unlicensed band.

In Example 51, the radio head of any one of Examples 38 to 50, wherein the first processing subsystem generating the third signal includes the first processing subsystem performing one or more actions of a physical layer, and wherein the second processing subsystem generating the fourth signal includes the second processing subsystem performing one or more actions of a radio link control.

In Example 52, the radio head of any one of Examples 38 to 51, wherein the first processing subsystem is further configured to implement an Open RAN split 7 architecture, and the second processing subsystem is configured to implement a split 2 architecture.

In Example 53, the radio head of any one of Examples 38 to 51, wherein each of the first processing subsystem and the second processing subsystem is further configured to implement an Open RAN split 7 architecture for each of the first radio access technology and the second radio access technology.

In Example 54, the radio head of any one of Examples 38 to 51, wherein each of the first processing subsystem and the second processing subsystem is further configured to implement a split 8 architecture for each of the first radio access technology and the second radio access technology.

In Example 55, a radio head system, including the radio head of Example 38 or 54, further including: one or more antennas, configured to wirelessly receive the first radiofrequency transmission and the second radiofrequency transmission and to output electrical signals representing first radiofrequency transmission and the second radiofrequency transmission to a baseband modem.

In Example 56, a radio head system of Example 55, further including the baseband modem, configured to receive the electrical signals representing first radiofrequency transmission and the second radiofrequency transmission, demodulate the electrical signals and optionally perform one or more processing operations on the electrical signals, and output the first signal and the second signal as the demodulated and optionally processed electrical signals.

In Example 57, the new radio centralized unit processor, including an input, coupled to a distributed unit, and configured to receive a first signal from a distributed unit, the first signal representing data that were wirelessly received on a first radiofrequency band according to a first radio access technology; and configured to receive a second signal from the distributed unit, the second signal representing data that were wirelessly received on a second radiofrequency band according to a second radio access technology; one or more outputs, coupled to a first data network and to a second data network; a processor, configured to process the first signal according to the first radio access technology and to send the processed first signal to the first data network; and to process the second signal according to the second radio access technology and to send the processed second signal to the second radio access network.

In Example 58, the new radio centralized unit processor of Example 57, wherein the first radio access technology is a wireless network technology according to Institute of Electrical and Electronics Engineers (IEEE) Standard 802.11 (Wi-Fi).

In Example 59, the new radio centralized unit processor of Example 57 or 58, and wherein the second radio access technology is the fifth generation technology standard (5G) according to the 3rd Generation Partnership Project (3GPP).

In Example 60, the new radio centralized unit processor of Example 57 or 57, wherein the second radio access technology is the sixth generation technology standard (6G) according to the Next G Alliance of the Alliance for Telecommunications Industry Solutions.

In Example 61, the new radio centralized unit processor of any of Examples 57 to 60, wherein the processor further includes a first processing subsystem for the first radio access technology and a second processing subsystem for the second radio access technology, wherein the controller processing the first signal according to the first radio access technology includes processing the first signal using the first processing subsystem, and wherein the controller processing the second signal according to the second radio access technology includes processing the second signal using the second processing subsystem.

In Example 62, the new radio centralized unit processor of any of Examples 57 to 61, further including or coupled to an artificial neural network, wherein the artificial neural network is configured to receive first data represented by the first signal and second data represented by the second signal, and to preform one or more spectrum management calculations based on the first data and the second data.

In Example 63, the new radio centralized unit processor of Example 62, wherein the one or more spectrum management calculations include quality of service calculations for transition from data transfer according to the first radio access technology to data transfer according to the second radio access technology.

In Example 64, the new radio centralized unit processor of Example 62, wherein the one or more spectrum management calculations include one or more security calculations, reliability calculations, mobility QoS/Handover calculations, positioning calculations, or any of these.

In Example 65, the new radio centralized unit processor of any of Examples 62 to 64, wherein the artificial neural network is configured to send a result of the one or more spectrum management calculations to the processor unit, and wherein the processor is configured to change a setting for wireless reception or wireless transmission on the first radio access technology or the second radio access technology based on the received result of the one or more spectrum management calculations.

In Example 66, the new radio centralized unit processor of any of Examples 62 to 64, wherein the artificial neural network is configured to determine a modification for wireless reception or wireless transmission on the first radio access technology or the second radio access technology based on the one or more spectrum management calculations, and to send to the processor an instruction to implement the modification.

In Example 67, the new radio centralized unit processor of any of Examples 62 to 64, wherein the artificial neural network is configured to determine a modification for wireless reception or wireless transmission on the first radio access technology or the second radio access technology based on the one or more spectrum management calculations, and to implement the modification.

In Example 68, the new radio centralized unit processor of any of Examples 62 to 67, wherein the spectrum management calculation includes a handoff procedure between the first radio access technology and the second radio access technology.

In Example 69, the new radio centralized unit processor of any of Examples 62 to 68, wherein the spectrum management calculation includes quality performance indicator of the first radio access technology and for use in the second radio access technology.

In Example 70, the wireless communication system, including a means for performing one or more radio head functions, including: an antenna port; a first communication port, configured to couple the means for performing one or more radio head functions to a means for performing one or more new radio distributed unit functions; and a radio head processor, including a first processing subsystem, configured to process a signal according to a first radio access technology; the means for performing one or more new radio distributed unit functions, including: a second communication port, configured to couple the means for performing one or more radio head functions to the means for performing one or more radio head functions; a third communication port, configured to couple the means for performing one or more radio head functions to a means for performing one or more new radio centralized unit functions or an edge network processor; and a new radio distributed unit processor, including a second processing subsystem, and configured to process a signal according to the first radio access technology; wherein either the radio head processor or the new radio distributed unit processor further includes a third processing subsystem, configured to process a signal according to a second radio access technology, different from the first radio access technology.

In Example 71, the wireless communication system of Example 70, wherein the radio head processor includes the third processing subsystem; wherein the third processing subsystem is further configured to receive a signal according to the second radio access technology from either the antenna port or the first communication port; to process the signal according to the second radio access technology, and send the processed signal to another of the antenna port or the first communication port.

In Example 72, the wireless communication system of Example 71, wherein the means for performing the radio head function further includes a multiplexer, the multiplexer including: a first port, configured to convey a signal to the first processing subsystem or receive a signal from the first processing subsystem; a second port, configured to convey a signal to the second processing subsystem or receive a signal from the second processing subsystem; a third port, configured to convey a signal to the third processing subsystem or receive a signal from the third processing subsystem; and a switching network, configured to selectively connect the third processing subsystem to either the first processing subsystem or the third processing subsystem.

In Example 73, the wireless communication system of Example 70, wherein the new radio distributed unit processor includes the third processing subsystem; wherein the third processing subsystem is further configured to receive a signal according to the second radio access technology from either the second communication port or the third communication port; process the signal according to the second radio access technology, and send the processed signal to another of the antenna port or the communication port.

In Example 74, the wireless communication system of Example 73, wherein the means for performing one or more radio head functions further includes a multiplexer, the multiplexer including a first port, configured to convey a signal to the first processing subsystem or receive a signal from the first processing subsystem; a second port, configured to convey a signal to the second processing subsystem or receive a signal from the second processing subsystem; a third port, configured to convey a signal to the third processing subsystem or receive a signal from the third processing subsystem; and a switching network, configured to selectively connect the second processing subsystem to either the first processing subsystem or the third processing subsystem.

In Example 75, the wireless communication system of Example 70 or 74, wherein each of the first processing subsystem and the third processing subsystem is an OS-level virtualization container.

In Example 76, the wireless communication system of Example 70 or 74, wherein each of the first processing subsystem and the third processing subsystem is a virtualized machine.

In Example 77, the wireless communication system of any one of Examples 70 to 76, wherein the first radio access technology is a licensed wireless network technology.

In Example 78, the wireless communication system of Example 77, wherein the licensed wireless network technology is any of a 4th Generation Broadband Cellular Network Technology (4G), a 5th Generation Broadband Cellular Network Technology (5G) according to the 3^{rd} Generation Partnership Project (3gPP), a 6^{th} Generation Broadband Cellular Network Technology (6G), or a 6^{th} generation technology standard (6G) according to the Next G Alliance of the Alliance for Telecommunications Industry Solutions.

In Example 79, the wireless communication system of any one of Examples 70 to 78, wherein the second radio access technology is an unlicensed wireless network technology.

In Example 80, the wireless communication system of Example 79, wherein the unlicensed wireless network technology is an unlicensed wireless network technology according to the Wi-Fi Alliance (Wi-Fi) and/or the Institute of Electrical and Electronics Engineers (IEEE) Standard 802.11 (Wi-Fi).

In Example 81, the wireless communication system of any one of Examples 70 to 80, wherein the first processing subsystem is configured to receive a signal representing a first radiofrequency transmission from a first radiofrequency band, and wherein the second processing subsystem is configured to receive a signal representing a second radiofrequency transmission from a second radiofrequency band, different from the first radiofrequency band.

In Example 82, the wireless communication system of Example 81, wherein the first radiofrequency band is a licensed band, and wherein the second radiofrequency band is an unlicensed band.

In Example 83, the wireless communication system of any one of Examples 70 to 82, wherein the first processing subsystem is configured to perform one or more actions of a physical layer, and wherein the second processing subsystem is configured to perform one or more actions of a radio link control.

In Example 84, the wireless communication system of any one of Examples 70 to 83, wherein the means for performing one or more radio head functions and the means for performing one or more radio head functions are configured to implement an Open RAN Split 7-2 architecture for each of the first radio access technology and the second radio access technology.

In Example 85, the wireless communication system of Example 84, wherein implementing the Open RAN Split 7-2 architecture includes the means for performing one or more radio head functions being configured to perform one or more low physical layer processes for each of the first radio access technology and the second radio access technology, and wherein the means for performing one or more radio head functions is configured to perform one or more high physical layer processors for each of the first radio access technology and the second radio access technology.

In Example 86, the wireless communication system of Example 85, wherein the one or more low physical layer processes include any of analog beamforming, digital beamforming, digital to analog conversion, analog to digital conversion, Fast Fourier Transform, Inverse Fast Fourier Transform, or precoding.

In Example 87, the wireless communication system of Example 85 or 86, wherein the one or more high physical layer processes include any of resource element mapping, layer mapping, scrambling, precoding, modulation, and encoding, rate matching, or cyclic redundancy code generation.

In Example 88, the wireless communication system of any one of Examples 70 to 83, wherein the means for performing one or more radio head functions and the means for performing one or more radio head functions are configured to implement an Open RAN Split 8-1 architecture for each of the first radio access technology and the second radio access technology.

In Example 89, the wireless communication system of Example 88, wherein implementing the Open RAN Split 7-1 architecture includes the means for performing one or more radio head functions being configured to perform one or more radiofrequency-level processes for each of the first radio access technology and the second radio access technology, and wherein the means for performing one or more radio head functions is configured to perform one or more physical layer processors for each of the first radio access technology and the second radio access technology.

In Example 90, the wireless communication system of Example 89, wherein the one or more radiofrequency level processes include any of digital to analog conversion or analog to digital conversion.

In Example 91, the wireless communication system of Example 89 or 90, wherein the one or more high physical layer processes include any of resource element mapping, layer mapping, scrambling, precoding, modulation, and encoding, rate matching, or cyclic redundancy code generation, beamforming, cyclic prefix insertion, Fast Fourier Transform, or Inverse Fast Fourier Transform.

In Example 92, the wireless communication system of any one of Examples 70 to 91, wherein the first processing subsystem is configured to: receive a first signal according to the first radio access technology from either the antenna port or the first communication port;

generate a second signal as the processed first signal; and send the second signal to another of the antenna port or the communication port.

In Example 93, the wireless communication system of Example 70 or 92, wherein the second processing subsystem is configured to: receive a third signal according to the first radio access technology from either the second communication port or the third communication port; generate a fourth signal as the processed third signal; and send the fourth signal to another of the second communication port or the third communication port.

In Example 94, the wireless communication system of any one of Examples 1 to 93, wherein the third processing subsystem is configured to: receive a fifth signal according to the second radio access technology and generate a sixth signal as the processed fifth signal.

In Example 95, the wireless communication system of any of Examples 70 to 94, further including a means for performing one or more new radio centralized unit functions, communicatively coupled to the means for performing one or more radio head functions, and further coupled to or including an artificial neural network, wherein the artificial neural network is configured to receive first data represented by the first signal and second data represented by the second signal, and to preform one or more spectrum management calculations based on the first data and the second data.

In Example 96, the wireless communication system of Example 95, wherein the one or more spectrum management calculations include quality of service calculations for transition from data transfer according to the first radio access technology to data transfer according to the second radio access technology.

In Example 97, the wireless communication system of Example 95, wherein the one or more spectrum management calculations include quality of service calculations for transition from data transfer according to the second radio access technology to data transfer according to the first radio access technology.

In Example 98, the wireless communication system of Example 96 or 97, wherein the one or more spectrum management calculations include one or more security calculations, reliability calculations, mobility QoS/Handover calculations, positioning calculations, or any of these.

In Example 99, the wireless communication system of any of Examples 96 to 98, wherein the artificial neural network is configured to send a result of the one or more spectrum management calculations to the processor unit, and wherein the processor is configured to change a setting for wireless reception or wireless transmission on the first radio access technology or the second radio access technology based on the received result of the one or more spectrum management calculations.

In Example 100, the wireless communication system of any of Examples 96 to 98, wherein the artificial neural network is configured to determine a modification for wireless reception or wireless transmission on the first radio access technology or the second radio access technology based on the one or more spectrum management calculations, and to send to the processor an instruction to implement the modification.

In Example 101, the wireless communication system of any of Examples 96 to 98, wherein the artificial neural network is configured to determine a modification for wireless reception or wireless transmission on the first radio access technology or the second radio access technology based on the one or more spectrum management calculations, and to implement the modification.

In Example 102, the wireless communication system of any of Examples 96 to 101, wherein the spectrum management calculation includes a handoff procedure between the first radio access technology and the second radio access technology.

In Example 103, the wireless communication system of any of Examples 96 to 102, wherein the spectrum management calculation includes quality performance indicator of the first radio access technology and for use in the second radio access technology.

In Example 104, the wireless communication system of any one of Examples 70 to 103, further including a means for performing one or more new radio centralized unit functions; the means for performing one or more new radio centralized unit functions being communicatively coupled to the means for performing one or more radio head functions and the distributed unit, and including a centralized unit processor; the centralized unit processor including a fourth processing subsystem, configured to process data according to the first radio access technology, and a fifth processing subsystem, configured to process data according the second radio access technology.

In Example 105, the wireless communication system of Example 104, wherein the centralized unit processor is configured to perform one or more analytics operations based on data from the fourth processing subsystem and data from the fifth processing subsystem.

In Example 106, the wireless communication system of Example 104 or 105, wherein the centralized unit processor is configured to perform one or more optimization operations based on data from the fourth processing subsystem and data from the fifth processing subsystem.

While the above descriptions and connected figures may depict components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

## Claims

1. A wireless communication system, comprising
a radio head, comprising:
an antenna port;
a first communication port, configured to couple the radio head to a new radio distributed unit; and
a radio head processor, comprising a first processing subsystem, configured to process a
signal according to a first radio access technology;
the new radio distributed unit, comprising:
a second communication port, configured to couple the new radio distributed unit to the radio head;
a third communication port, configured to couple the new radio distributed unit to a new radio centralized unit or an edge network processor; and
a new radio distributed unit processor, comprising a second processing subsystem, and
configured to process a signal according to the first radio access technology;
wherein either the radio head processor or the new radio distributed unit processor further comprises a third processing subsystem, configured to process a signal according to a second radio access technology, different from the first radio access technology.

2. The wireless communication system of claim 1, wherein the radio head processor comprises the third processing subsystem; wherein the third processing subsystem is further configured to receive a signal according to the second radio access technology from either the antenna port or the first communication port; to process the signal according to the second radio access technology, and
send the processed signal to another of the antenna port or the first communication port;
and preferably;
wherein the radio head further comprises a multiplexer, the multiplexer comprising
a first port, configured to convey a signal to the first processing subsystem or receive a signal from the first processing subsystem;
a second port, configured to convey a signal to the second processing subsystem or receive a signal from the second processing subsystem;
a third port, configured to convey a signal to the third processing subsystem or receive a signal from the third processing subsystem; and
a switching network, configured to selectively connect the third processing subsystem to either the first processing subsystem or the third processing subsystem.

3. The wireless communication system of claim 1, wherein the new radio distributed unit processor comprises the third processing subsystem; wherein the third processing subsystem is further configured to receive a signal according to the second radio access technology from either the second communication port or the third communication port; process the signal according to the second radio access technology, and
send the processed signal to another of the antenna port or the communication port;
and preferably;
wherein the radio head further comprises a multiplexer, the multiplexer comprising:
a first port, configured to convey a signal to the first processing subsystem or receive a signal from the first processing subsystem;
a second port, configured to convey a signal to the second processing subsystem or
receive a signal from the second processing subsystem;
a third port, configured to convey a signal to the third processing subsystem or receive a signal from the third processing subsystem; and
a switching network, configured to selectively connect the second processing subsystem to either the first processing subsystem or the third processing subsystem.

4. The wireless communication system of any one of claims 1 to 3, wherein each of the first processing subsystem and the third processing subsystem is an OS-level virtualization container, or
wherein each of the first processing subsystem and the third processing subsystem is a virtualized machine.

5. The wireless communication system of any one of claims 1 to 4, wherein the first radio access technology is a licensed wireless network technology;
and preferably,
wherein the licensed wireless network technology is any of a 4th Generation Broadband Cellular Network Technology (4G), a 5th Generation Broadband Cellular Network Technology (5G) according to the 3^{rd} Generation Partnership Project (3gPP), a 6^{th} Generation Broadband Cellular Network Technology (6G), or a 6^{th} generation technology standard (6G) according to the Next G Alliance of the Alliance for Telecommunications Industry Solutions.

6. The wireless communication system of any one of claims 1 to 5, wherein the second radio access technology is an unlicensed wireless network technology;
and preferably,
wherein the unlicensed wireless network technology is an unlicensed wireless network technology according to the Wi-Fi Alliance (Wi-Fi) and/or the Institute of Electrical and Electronics Engineers (IEEE) Standard 802.11 (Wi-Fi).

7. The wireless communication system of any one of claims 1 to 6, wherein the first processing subsystem is configured to receive a signal representing a first radiofrequency transmission from a first radiofrequency band, and wherein the second processing subsystem is configured to receive a signal representing a second radiofrequency transmission from a second radiofrequency band, different from the first radiofrequency band;
and preferably
wherein the first radiofrequency band is a licensed band, and wherein the second radiofrequency band is an unlicensed band.

8. The wireless communication system of any one of claims 1 to 7, wherein the first processing subsystem is configured to perform one or more actions of a physical layer, and wherein the second processing subsystem is configured to perform one or more actions of a radio link control.

9. The wireless communication system of any one of claims 1 to 8, wherein the radio head and the new radio distributed unit are configured to implement an Open RAN Split 7-2 architecture for each of the first radio access technology and the second radio access technology;
and preferably,
wherein implementing the Open RAN Split 7-2 architecture comprises the radio head being configured to perform one or more low physical layer processes for each of the first radio access technology and the second radio access technology, and wherein the new radio distributed unit is configured to perform one or more high physical layer processors for each of the first radio access technology and the second radio access technology;
wherein the one or more low physical layer processes comprise analog beamforming, digital beamforming, digital to analog conversion, analog to digital conversion, Fast Fourier Transform, Inverse Fast Fourier Transform, precoding, or any of these; and
wherein the one or more high physical layer processes comprise resource element mapping, layer mapping, scrambling, precoding, modulation, and encoding, rate matching, or cyclic redundancy code generation, or any of these.

10. The wireless communication system of any one of claims 1 to 5, wherein the radio head and the new radio distributed unit are configured to implement an Open RAN Split 8-1 architecture for each of the first radio access technology and the second radio access technology;
and preferably,
wherein implementing the Open RAN Split 7-1 architecture comprises the radio head being configured to perform one or more radiofrequency-level processes for each of the first radio access technology and the second radio access technology, and wherein the new radio distributed unit is configured to perform one or more physical layer processors for each of the first radio access technology and the second radio access technology;
wherein the one or more radiofrequency level processes comprise digital to analog conversion or analog to digital conversion; and
wherein the one or more high physical layer processes comprise resource element mapping, layer mapping, scrambling, precoding, modulation, and encoding, rate matching, or cyclic redundancy code generation, beamforming, cyclic prefix insertion, Fast Fourier Transform, or Inverse Fast Fourier Transform, or any of these.

11. The wireless communication system of any of claims 1 to 10, further comprising a new radio centralized unit, communicatively coupled to the radio head, and further coupled to or comprising an artificial neural network, wherein the artificial neural network is configured to receive first data represented by the first signal and second data represented by the second signal, and to preform one or more spectrum management calculations based on the first data and the second data.

12. The wireless communication system of claim 11, wherein the one or more spectrum management calculations comprise quality of service calculations for transition from data transfer according to the first radio access technology to data transfer according to the second radio access technology; or
wherein the one or more spectrum management calculations comprise quality of service calculations for transition from data transfer according to the second radio access technology to data transfer according to the first radio access technology; or wherein the one or more spectrum management calculations comprise one or more security calculations, reliability calculations, mobility QoS/Handover calculations, positioning calculations, or any of these.

13. The wireless communication system of claim 11 or 12, wherein the artificial neural network is configured to send a result of the one or more spectrum management calculations to the processor unit, and wherein the processor is configured to change a setting for wireless reception or wireless transmission on the first radio access technology or the second radio access technology based on the received result of the one or more spectrum management calculations;
or
wherein the artificial neural network is configured to determine a modification for wireless reception or wireless transmission on the first radio access technology or the second radio access technology based on the one or more spectrum management calculations, and to either send to the processor an instruction to implement the modification or to implement the modification.

14. The wireless communication system of any of claims 8 to 13, wherein the spectrum management calculation comprises a handoff procedure between the first radio access technology and the second radio access technology, or a quality performance indicator of the first radio access technology and for use in the second radio access technology.

15. The wireless communication system of any one of claims 1 to 14, further comprising a new radio centralized unit; the new radio centralized unit being communicatively coupled to the radio head and the distributed unit, and comprising a centralized unit processor; the centralized unit processor comprising a fourth processing subsystem, configured to process data according to the first radio access technology, and a fifth processing subsystem, configured to process data according the second radio access technology;
wherein the centralized unit processor is configured to perform one or more analytics operations and/or one or more optimization operations based on data from the fourth processing subsystem and data from the fifth processing subsystem.
